# FASCICULE DE BREVET EUROPEEN

(11) **EP 1 759 964 B1**
(45) Date de publication et mention de la délivrance du brevet: **02.12.2009**
(21) Numéro de dépôt: 06300749.6
(22) Date de dépôt: 03.07.2006
(51) Int. Cl.: B62D 29/00, B62D 25/04, B62D 21/15

(54) **Insert pour caisse de véhicule automobile**
Einlegeteil für eine Kraftfahrzeugkarosserie
Insert for a motor vehicle body

(30) Priorité: 06.09.2005 FR 0509089
(43) Date de publication de la demande: 07.03.2007
(73) Titulaire: PEUGEOT CITROËN AUTOMOBILES S.A., 78140 Vélizy Villacoublay (FR)
(72) Inventeur: Patois, Christophe, 25310 Thulay (FR); Kauffmann, Michel, 25460 Etupes (FR); Saillet, Philippe, 25700 Valentigney (FR)

(56) Documents cités:
- EP-A- 1 006 022
- EP-A- 1 331 161
- US-A- 6 129 410
- PATENT ABSTRACTS OF JAPAN vol. 2000, no. 12, 3 janvier 2001 (2001-01-03) & JP 2000 247258 A (SUZUKI MOTOR CORP), 12 septembre 2000 (2000-09-12)
- PATENT ABSTRACTS OF JAPAN vol. 2002, no. 11, 6 novembre 2002 (2002-11-06) -& JP 2002 211436 A (SUZUKI MOTOR CORP), 31 juillet 2002 (2002-07-31)

## Description

L'invention concerne un insert de rigidification pour caisse de véhicule automobile, destiné à être monté dans une cavité délimitée par au moins deux tôles soudées l'une à l'autre.

Afin de respecter les normes en vigueur en matière de déformation de la caisse suite à un choc correspondant par exemple à un accident, la caisse des véhicules automobiles comprend un ou plusieurs inserts de rigidification destinés à réduire ces déformations.

Un tel insert est monté à la jonction de deux éléments structuraux de la caisse, ces éléments structuraux étant par exemple un longeron et un pied avant de la caisse qui constituent des poutres creuses.

Ces éléments ainsi que leur jonction sont formés par différentes tôles assemblées par soudage des bords respectifs de ces tôles, ce qui délimite une zone creuse ou cavité, notamment au niveau de la jonction en elle-même.

L'insert de rigidification est par exemple une pièce en matière plastique formée d'une ou plusieurs parois renforcées par des nervures, qui définit une forme générale tridimensionnelle complémentaire de la cavité dans laquelle il est monté.

Cet insert est rigidement fixé à une ou plusieurs des tôles délimitant la cavité dans laquelle il est monté pour réduire leurs déformations. Dans le cas d'un insert renforçant une jonction entre un longeron et un pied avant perpendiculaire à ce longeron, l'inclinaison prise par le pied sous l'effet du choc est diminuée par la présence de l'insert.

L'efficacité d'un tel insert est conditionnée par sa fixation aux tôles qui l'entourent. A cet effet, un tel insert est généralement fixé par collage, en étant enduit de colle et positionné dans l'une des tôles avant soudage des tôles complémentaires.

Compte tenu des dispersions géométriques importantes de l'assemblage de tôles soudées, la colle utilisée est une colle moussante, c'est à dire capable de combler des interstices plus ou moins importants et pouvant varier de façon significative entre une caisse et une autre.

Mais cette colle moussante doit également assurer une cohésion optimale entre la tôle et l'insert, de sorte qu'il s'agit d'une colle ayant un coût très important.

On connaît via le document EP 1006022 A un insert de rigidification définissant une forme générale tridimentionnelle complémentaire de la cavité dans laquelle il est monté, cette cavité étant délimitée par au moins deux tôles soudées l'une à l'autre La fixation de l'insert avec les tôles est réalisée par soudage de moyens d'attache métalliques placés de part et d'autre de l'insert, qui ne sont pas de surcroît en interface directe avec les deux tôles.

Le but de l'invention est de remédier à cet inconvénient en proposant un insert pouvant être fixé à moindre coût.

A cet effet, l'invention a pour objet un insert de rigidification pour caisse de véhicule automobile, destiné à être monté dans une cavité délimitée par au moins deux tôles soudées l'une à l'autre, ledit insert étant constitué d'une pièce en matière plastique formée d'une ou plusieurs parois renforcées par des nervures, qui définit une forme générale tridimentionnelle complémentaire de la cavité dans laquelle il est monté, l'insert étant équipé d'au moins une patte de fixation métallique destinée à être soudée au moins à l'une des tôles, la patte métallique s'étendant radialement par rapport au corps de l'insert pour pouvoir être soudée entre un premier bord d'une première tôle et un second bord d'une seconde tôle.

Selon une autre caractéristique de l'invention, l'insert a un corps en matière plastique, et au moins une patte métallique est bouterollée à ce corps en matière plastique.

Selon une autre caractéristique de l'invention, une patte se présente sous forme d'une griffe solidarisée au corps principal de l'insert en plusieurs points de bouterollage.

Selon une autre caractéristique de l'invention, l'insert comprend une paroi définissant une arête, et dans lequel la griffe comprend une embase emboîtée sur cette arête.

Selon une autre caractéristique de l'invention, l'insert comprend plusieurs nervures perpendiculaires à la paroi, et la griffe comprend un bord dans lequel sont réalisées des encoches qui sont engagées sur ces nervures.

Selon une autre caractéristique de l'invention, l'insert a une forme générale correspondant à la lettre T pour rigidifier une embase de pied milieu de caisse en étant intercalé au moins partiellement entre un côté de caisse et un longeron intérieur.

Selon une autre caractéristique de l'invention, l'insert a une forme générale d'équerre pour rigidifier une embase de pied avant de caisse en étant intercalé au moins partiellement entre un côté de caisse et un longeron intérieur.

L'invention sera maintenant décrite plus en détail, et en référence aux dessins annexés qui en illustrent une forme de réalisation à titre d'exemple non limitatif.
La figure 1 est une vue d'ensemble d'une jonction renforcée par un insert selon l'invention ;

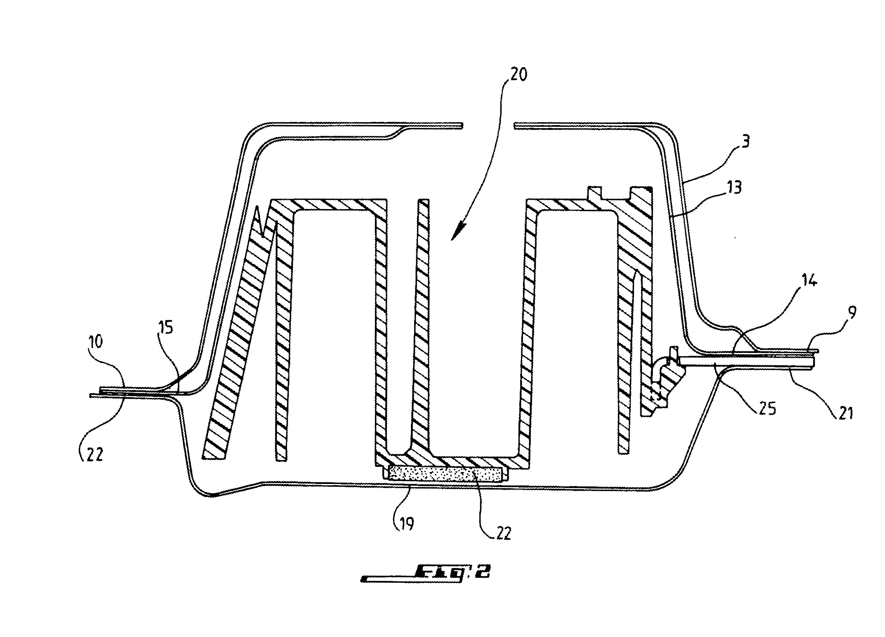

La figure 2 est une vue en coupe de la jonction de la figure 1 ;
La figure 3 est une vue en coupe d'une patte de fixation de l'insert selon l'invention ;
La figure 4 est une autre vue en coupe d'une patte de fixation de l'insert selon l'invention ;
La figure 5 est une vue d'ensemble d'une autre jonction renforcée par un insert selon l'invention ;
La figure 6 est une vue en coupe de l'autre jonction renforcée par un insert selon l'invention ;

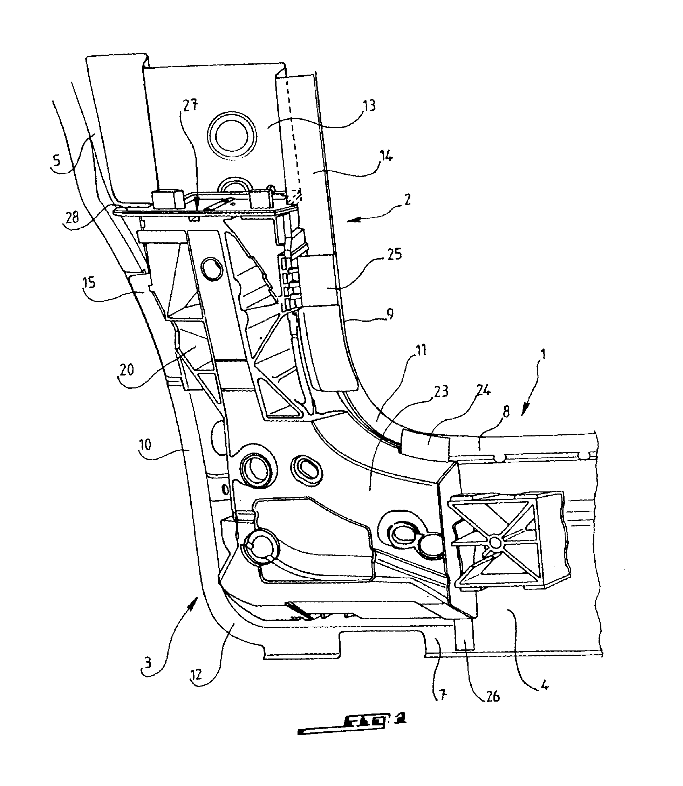

La figure 1 est une vue d'une partie de caisse de véhicule automobile correspondant à une jonction entre un longeron 1 s'étendant horizontalement et un pied avant 2 s'étendant verticalement. Cette figure 1 est un vue interne, c'est-à-dire représentant la jonction telle que vue depuis l'intérieur de la caisse.

Le longeron 1 et le pied avant 2 sont délimités vers l'extérieur du véhicule par une même tôle appelée côté de caisse 3, qui a localement une forme générale de L. Ce côté de caisse 3 a une forme concave qui s'étend vers l'arrière du plan de la figure 1.

Ce côté de caisse 3 comprend une partie inférieure 4, et une partie supérieure 5 s'étendant à angle droit par rapport à la partie inférieure, et partant d'une extrémité avant de cette partie inférieure 4. La partie inférieure 4 s'étend horizontalement, elle correspond au longeron 1, et est délimitée vers le bas par un bord horizontal inférieur 7, et vers le haut par un bord horizontal supérieur 8.

Cette partie inférieure 4 est prolongée par la partie supérieure 5 qui s'étend verticalement et correspond au pied avant 2. Cette partie supérieure est délimitée d'une part par un bord vertical arrière 9 prolongeant le bord horizontal supérieur 8, et d'autre part par un bord vertical avant 10 prolongeant le bord horizontal inférieur 7.

Le bord vertical arrière 9 rejoint le bord horizontal supérieur 8 au niveau d'une première zone courbe 11, et le bord vertical avant 10 rejoint le bord horizontal inférieur 7 au niveau d'une seconde zone courbe 12. Les zones courbes 11 et 12 délimitent sensiblement la jonction entre le longeron 1 et le pied avant 2, elles correspondent à l'embase du pied avant 2.

La partie supérieure 5 est renforcée en étant doublée par un renfort 13 ayant un bord vertical arrière 14 et un bord vertical avant 15 soudés respectivement au bord vertical arrière 9 et au bord vertical avant 10.

La partie inférieure 4 est complétée par une tôle appelée longeron intérieur, non représenté, pour former une poutre creuse constituant le longeron 1. Ce longeron intérieur est également délimité par un bord horizontal supérieur et par un bord horizontal inférieur et solidarisé par soudage de ces bords, respectivement au bord horizontal supérieur et inférieur 8 et 7.

De façon analogue, la partie supérieure 5 est également complétée par un montant intérieur appelé doublure d'aile, repéré par 19 et comprenant deux bords 21 et 22 soudés aux bords verticaux arrière et avant 9 et 10 pour former le pied avant 2.

Le longeron 1 et le pied avant 2 constituent ainsi deux poutres creuses s'étendant dans le prolongement l'une de l'autre en étant disposées en L, et définissant une cavité interne au niveau de leur jonction. La jonction du longeron 1 et du pied avant 2 est rigidifiée par un insert 20 qui est placé dans cette cavité.

Cet insert 20 est par exemple positionné dans le côté de caisse 3 avant assemblage du longeron intérieur et de la doublure d'aile par soudage de leurs bords respectifs aux bords du côté de caisse. Après soudage, cet insert 20 est ainsi prisonnier de la cavité qu'il renforce.

L'insert 20 est ici fabriqué en matière plastique, et a une forme générale en L complémentaire de la cavité dans laquelle il est monté. Il comprend principalement une paroi 23, rigidifiée par des nervures internes définissant une structure proche d'une structure de nid d'abeilles.

La paroi 23 comprend plusieurs zones de collage réparties le long de l'insert pour longer le longeron intérieur, la doublure d'aile 19, et le côté de caisse 3.

Comme visible notamment en figure 1, cet insert qui est réalisé en matière plastique, est équipé de deux pattes de fixation métalliques, repérées par 24 et 25. Chaque patte de fixation 24, 25, est solidarisée au corps d'insert par bouterollage ou sertissage.

Ces pattes s'étendent radialement par rapport au corps de l'insert, dans un plan qui coïncide avec le plan de la figure 1, c'est-à-dire avec le plan dans lequel s'étendent les différents bords 8-12 du côté de caisse 3. La première patte 24 dépasse ainsi du corps de l'insert pour venir en appui sur le bord horizontal supérieur 8, et la seconde patte 25 dépasse pour venir en appui sur le bord vertical arrière 9, comme c'est le cas dans la figure 1.

La solidarisation de l'insert avec la caisse consiste ainsi à le positionner dans le côté de caisse 3, de telle façon que les pattes de fixation 24 et 25 soient en appui respectivement sur les bords 8 et 9. Ensuite, le longeron intérieur et la doublure d'aile sont 19 soudés par leurs bords respectifs aux bords correspondants du côté de caisse.

Il est à noter que la seconde patte 25 est plus particulièrement en appui sur le bord vertical arrière 14 du renfort 13 qui est lui-même en appui sur le bord vertical arrière 9 du côté de caisse 3.

Durant cette opération de soudage, qui est par exemple un soudage électrique par points, des points de soudage sont réalisés au niveau des pattes de fixation 24 et 25. Ceci permet de solidariser la première patte 24 directement au côté de caisse 3 et au longeron intérieur, et de solidariser la seconde patte 25 au renfort 13 et donc au côté de caisse 3, et à la doublure d'aile.

Ces pattes de fixation métalliques assurent une fixation rigide de l'insert à la caisse, ce qui est réalisé durant une opération de soudage de cette caisse, c'est-à-dire directement sur poste de ferrage.

Afin de faciliter le positionnement géométrique de l'insert 20 avant soudage, celui-ci comprend une première languette de positionnement, repérée par 26. Cette première languette de positionnement dépasse du corps principal de l'insert 20, en s'étendant vers l'extérieur pour venir en appui sur le bord horizontal inférieur 7 du côté de caisse 3.

Il comprend encore, en extrémité supérieure une face 27 qui dépasse du corps pour former une seconde languette de positionnement 28 apte à venir en appui sur une zone proche du bord vertical avant 10 du côté de caisse 3.

Grâce aux languettes de positionnement 26 et 28, et aux pattes de fixation 24 et 25, l'insert 20 peut être positionné précisément dans une position médiane par rapport à la cavité, simplement en plaçant ces languettes et pattes de fixation en appui contre les bords correspondants du côté de caisse 3.

Après soudage du longeron intérieur, et de la doublure d'aile 19 sur le côté de caisse 3, la languette de positionnement 26 est prise entre un bord du longeron intérieur, et un bord correspondant du côté de caisse.

Les zones d'encollage de la paroi 23 sont enduites avec une colle moussante spécifique, pour assurer qu'après montage de l'insert dans la cavité, il soit solidarisé aux tôles qui délimitent cette cavité par de la colle moussante.

Les pattes de fixation et les languettes de positionnement permettent également de réduire la quantité de colle moussante à utiliser en assurant un positionnement précis de l'insert, dans la cavité, de sorte que les variations d'épaisseur de colle, d'un exemplaire de caisse à l'autre sont diminuées.

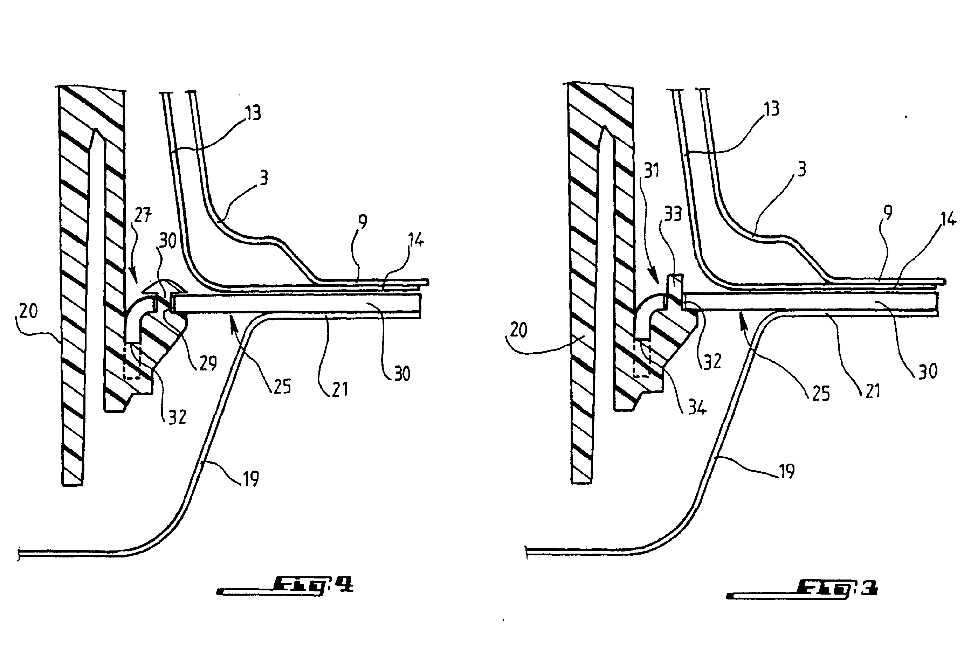

Comme indiqué plus haut, chaque patte de fixation 24, 25 est solidarisée au corps de l'insert 20 par sertissage ou bouterollage, ce qui est représenté plus en détail sur les figures 3 et 4.

Chaque patte 24, 25 se présente sous forme d'une bande métallique comprenant une extrémité de fixation plane 30, qui dépasse du corps d'insert 20 pour sa fixation à la caisse par soudage. A l'opposée de cette extrémité plane 30 la patte comprend une embase 31 incluant une portion repliée à angle droit.

L'embase 31 comprend un trou ou perçage 32 apte à s'engager sur un plot complémentaire 33 du corps de l'insert 20, et une portion repliée à angle droit incluant une encoche destinée à s'emboîter dans une autre encoche, repérée par 34, et réalisée dans une nervure correspondante du corps de l'insert.

La fixation de la patte 25 sur le corps de l'insert 20 consiste ainsi à engager son embase d'une part sur le plot 33, et d'autre part dans l'encoche 34. Après cette opération, l'extrémité supérieure du plot 33 est sertie à chaud, ou par tout autre procédé pour bloquer la patte 25 au niveau du trou 32, comme c'est le cas dans la figure 4.

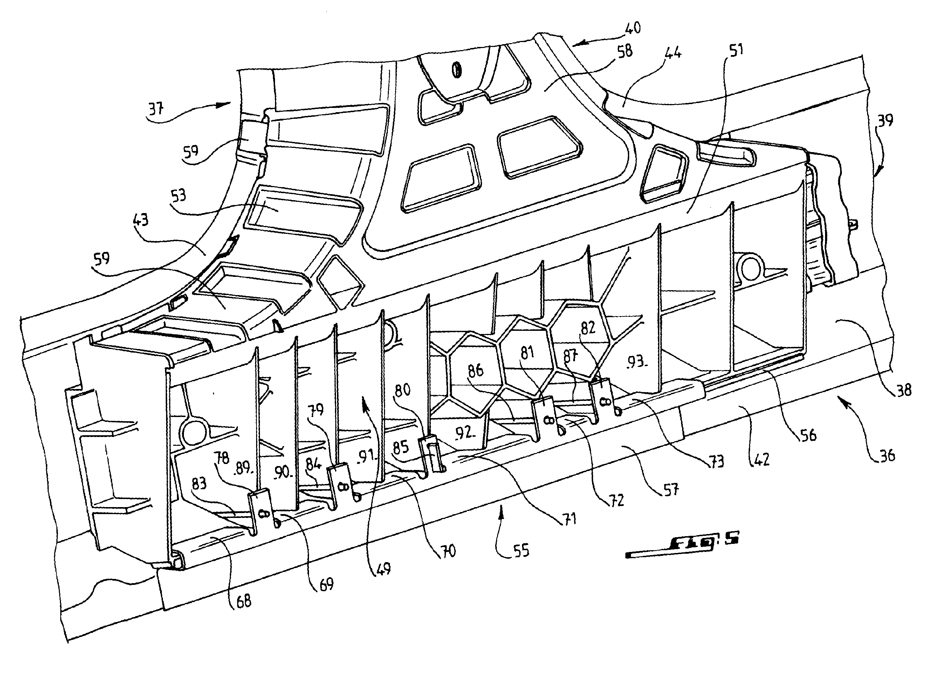

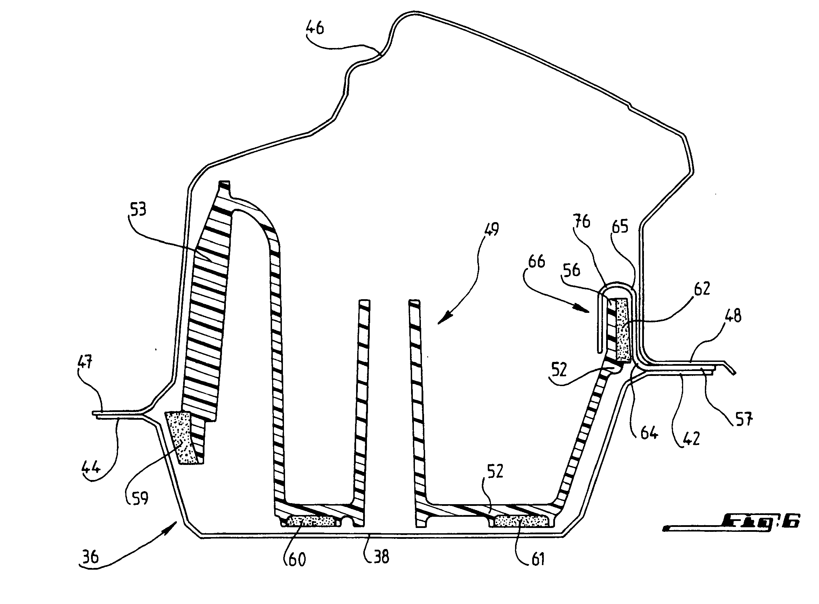

L'invention s'applique également à d'autres inserts de rigidification de caisse, comme par exemple un insert de pied central ayant une forme générale correspondant à la lettre T, comme représenté sur les figures 5 et 6.

La figure 5 est une vue d'une jonction entre un longeron 36 s'étendant horizontalement et un pied milieu 37 s'étendant verticalement. Cette figure 5 est un vue externe, c'est-à-dire représentant la jonction telle que vue depuis l'extérieur de la caisse.

Le longeron 36 comprend une tôle appelée longeron intérieur 38, ayant localement une forme de T. Il comprend une partie inférieure 39 horizontale et une partie supérieure 40 s'étendant à angle droit par rapport à la partie inférieure 39. Cette partie supérieure 40 correspond à l'embase du pied milieu 37, c'est-à-dire à la jonction de ce pied milieu 37 avec le longeron 36.

Ce longeron intérieur 38 forme une paroi concave s'étendant en arrière de la figure 5. Il comprend trois bords s'étendant dans le plan de la figure, et aptes à recevoir d'autre éléments de tôlerie fixés à ces bords par soudage.

Ces trois bords comprennent un bord horizontal inférieur 42 correspondant au bas de la partie inférieure 39, un bord supérieur avant 43 s'étendant horizontalement le long du haut de la partie inférieure 39 et se prolongeant verticalement le long de la partie supérieure 40, et un bord supérieur arrière 44 qui longe horizontalement le haut de la partie inférieure 39 en se prolongeant verticalement le long de la partie supérieure 40.

La partie de caisse de la figure 5 est complétée par un côté de caisse en tôle 46, ayant une forme générale de T, et représenté en coupe sur la figure 6. Ce côté de caisse comprend un bord supérieur avant 47 et un bord horizontal inférieur 48 soudés aux bords du longeron intérieur 38 et à deux bords d'un montant intérieur vertical non représenté.

Ce côté de caisse 46 forme avec le montant intérieur une poutre creuse correspondant au pied milieu 37, et avec le longeron intérieur 38 une poutre horizontale creuse correspondant au longeron 36. La jonction du longeron 36 et du pied milieu 37 est rigidifiée par un insert 49 placé dans la cavité délimitée par ce pied milieu et ce longeron.

Cet insert 49 est par exemple positionné dans le longeron intérieur 38 avant soudage du côté de caisse au longeron intérieur 38 et au montant intérieur.

L'insert 49 est en matière plastique, et a une forme générale correspondant à la lettre T, et il comprend une paroi principale ayant une section transversale en forme de S visible en figure 6. Cette paroi est renforcée par des nervures internes qui définissent une structure proche d'une structure de nid d'abeilles.

Plus particulièrement, la paroi principale 51 est composée d'une paroi inférieure 52 qui longe principalement une face horizontale du longeron intérieur 38, cette paroi inférieure étant prolongée par une paroi supérieure 53 qui longe principalement une face du côté de caisse qui apparaît en figure 6.

Cet insert 49 est équipé d'une patte de fixation métallique se présentant sous forme d'une griffe 55, et qui est solidarisée à cet insert 49 par bouterollage et/ou sertissage.

Comme visible sur les figures 5 et 6, la paroi inférieure 52 de l'insert 49 se termine par une arête rectiligne 56 qui s'étend horizontalement le long du bord horizontal inférieur 42 du longeron intérieur, lorsque l'insert est positionné dans le longeron intérieur.

L'extrémité de cette paroi inférieure s'étend à angle droit par rapport au plan du bord horizontal inférieur 42, et elle dépasse par rapport à ce bord, en direction du côté de caisse.

La patte de fixation 55 est solidarisée à l'extrémité de la paroi inférieure 52, pour définir une bande de fixation 57 s'étendant radialement par rapport au corps de l'insert 49 et venant en appui contre ce bord 42 lorsque l'insert est positionné dans le longeron intérieur 38.

La fixation de l'insert 49 à la jonction consiste à le positionner dans le longeron 38, et à souder les bords du côté de caisse aux bords du longeron. Ceci est effectué par soudure électrique par points, ce qui a pour effet de souder dans le même temps la bande de fixation 57 au bord horizontal inférieur 42 du longeron intérieur, et au bord horizontal inférieur 48 entre lesquels il est placé, comme visible figure 6.

Le positionnement géométrique de l'insert dans la cavité est facilité par deux languettes de positionnement, dont l'une repérée par 59 est visible sur la figure 5. Ces languettes de positionnement sont situées en partie supérieure de l'insert, et dépassent radialement pour venir en appui sur le bord supérieur avant 43 et sur le bord supérieur arrière 44.

L'insert 49 comprend encore différentes zones d'encollage 58-62 réparties sur ses parois supérieure et inférieure, qui sont enduites de colle moussante avant montage pour améliorer la solidarisation de l'insert aux tôles de la cavité.

La patte de fixation ou griffe 55 est solidarisée au corps de l'insert 49 par bouterollage et/ou sertissage. Cette patte est issue d'une tôle à contour rectangulaire qui est repliée le long d'un bord dans lequel sont réalisées des encoches, selon deux plis parallèles 64, 65, à angle droit, pour constituer une embase 66 de solidarisation au corps de l'insert 49, et définir une section générale correspondant à la lettre Z.

Certaines des parties de cette embase 66, situées entre deux encoches, repérées par 68-73, sont ensuite repliées à angle droit, selon un troisième pli 76 pour définir localement des sections en U formant des pinces aptes à s'emboîter sur l'arête 56 de la paroi inférieure 52, ce qui apparaît sur la figure 6.

D'autres parties, repérées par 78-82, situées entre des encoches successives restent droites pour former des lamelles droites 78-82 s'étendant parallèlement à la bande de fixation 75. Chaque lamelle 78-82 comprend un perçage apte à s'engager sur un plot correspondant 83-87 en matière plastique, qui dépasse du corps de l'insert 49. La griffe est ainsi fixée au corps principal par différents points de bouterollage ou de sertissage

Dans l'exemple des figures, chaque lamelle droite 78-82 est entourée par deux parties repliées 68-73, le long de la griffe de fixation. Les parties repliées 69, 70, 71 et 73 comprennent chacune une encoche s'emboîtant sur une nervure de renfort correspondante 89-93 du corps de l'insert 49.

Comme visible sur la figure 5, les nervures 89-93 s'étendent à angle droit par rapport à la paroi inférieure 52, de sorte qu'elles permettent un blocage longitudinal efficace de la patte 55, par simple emboîtement des encoches de l'embase de cette patte.

La solidarisation de la patte 55 au corps de l'insert 49 est encore améliorée par l'ajout de colle moussante sur une face inférieure de la paroi inférieure 52, c'est-à-dire sur la zone d'encollage 62 qui est en appui sur une face interne de l'embase 66.

## Revendications

1. Insert (20 ; 49) de rigidification pour caisse de véhicule automobile, destiné à être monté dans une cavité délimitée par au moins deux tôles (19, 3 ; 38, 46) soudées l'une à l'autre, ledit insert étant constitué d'une pièce en matière plastique formée d'une ou plusieurs parois renforcées par des nervures, qui définit une forme générale tridimensionnelle complémentaire de la cavité dans laquelle il est monté, l'insert étant équipé d'au moins une patte de fixation métallique (24, 25 ; 55) destinée à être soudée au moins à l'une des tôles, la patte métallique s'étendant radialement par rapport au corps de l'insert (20 ; 49) pour pouvoir être soudée entre un premier bord (8, 9) d'une première tôle (3) et un second bord (21) d'une seconde tôle (19).

2. Insert (20 ; 49) selon la revendication 1, comprenant un corps en matière plastique, et dans lequel au moins une patte métallique (24, 25 ; 55) est bouterollée à ce corps en matière plastique.

3. Insert (20 ; 49) selon la revendication 2, comprenant une patte se présentant sous forme d'une griffe (55) solidarisée au corps de l'insert (49) en plusieurs points de bouterollage.

4. Insert (20; 49) selon la revendication 3, comprenant une paroi (52) définissant une arête (56), et dans lequel la griffe (55) comprend une embase (66) emboîtée sur cette arête (56).

5. Insert (20; 49) selon la revendication 4, comprenant plusieurs nervures (89-93) perpendiculaires à la paroi (52), et dans lequel la griffe (55) comprend un bord dans lequel sont réalisées des encoches qui sont engagées sur ces nervures (89-93).

6. Insert (49) selon l'une des revendications 1 à 5, ayant une forme générale correspondant à la lettre T pour rigidifier une embase de pied milieu de caisse en étant intercalé au moins partiellement entre un côté de caisse (46) et un longeron intérieur (38).

7. Insert (20) selon l'une des revendications 1 à 5, ayant une forme générale d'équerre pour rigidifier une embase de pied avant de caisse en étant intercalé au moins partiellement entre un côté de caisse (3) et un longeron intérieur (19).

## Claims

1. Stiffening insert (20; 49) for a motor vehicle body, intended to be mounted in a cavity delimited by at least two sheets (19, 3; 38, 46) welded together, the said insert consisting of a piece of plastic formed of one or more walls reinforced by ribs, which defines a three-dimensional overall shape that complements the cavity in which it is mounted, the insert being equipped with at least one metal fixing tab (24, 25; 55) intended to be welded at least to one of the sheets, the metal tab extending radially relative to the body of the insert (20; 49) so that it can be welded between a first edge (8, 9) of a first sheet (3) and a second edge (21) of a second sheet (19).

2. Insert (20; 49) according to Claim 1, comprising a plastic body, and in which at least one metal tab (24, 25; 55) is staked to this plastic body.

3. Insert (20; 49) according to Claim 2, comprising a tab in the form of a claw (55) secured to the body of the insert (49) at several staking points.

4. Insert (20; 49) according to Claim 3, comprising a wall (52) defining an edge (56), and in which the claw (55) has a base (66) nested in this edge (56).

5. Insert (20; 49) according to Claim 4, comprising several ribs (89-93) perpendicular to the wall (52), and in which the claw (55) comprises a border in which notches are formed, these notches being fitted over these ribs (89-93).

6. Insert (49) according to one of Claims 1 to 5, having an overall shape corresponding to the letter T to stiffen the bottom of a centre pillar of a car body by being interposed at least partially between one body side (46) and an inner side rail (38).

7. Insert (20) according to one of Claims 1 to 5, having the overall shape of an angle bracket to stiffen the base of a front pillar of a body by being interposed at least partially between a body side (3) and an inner side rail (19).

## Patentansprüche

1. Versteifungseinsatz (20; 40) für eine Kraftfahrzeugkarosserie, der in einem Hohlraum angebracht werden soll, welcher durch mindestens zwei miteinander verschweißte Bleche (19, 3; 38, 46) begrenzt wird, wobei der Einsatz aus einem Kunststoffteil besteht, das durch eine oder mehrere durch Rippen verstärkte Wände gebildet wird und eine allgemein dreidimensionale Form besteht, die zu dem Hohlraum, in dem es montiert wird, komplementär ist, wobei der Einsatz mit mindestens einem metallischen Befestigungsansatz (24, 25; 55) versehen ist, der mit mindestens einem der Bleche verschweißt werden soll, wobei sich der metallische Ansatz radial bezüglich des Körper des Einsatzes (20; 49) erstreckt, so dass er zwischen einem ersten Rand (8, 9) eines ersten Bleches (3) und einem zweiten Rand (21) eines zweiten Bleches (19) verschweißt werden kann.

2. Einsatz (20; 49) nach Anspruch 1, der einen Kunststoffkörper umfasst und bei dem mindestens ein metallischer Ansatz (24, 25; 55) an diesem Kunststoffkörper verquetscht ist.

3. Einsatz (20; 49) nach Anspruch 2, der einen Ansatz umfasst, der in Form einer Klaue (55) vorliegt, welche an mehreren Verquetschungspunkten mit dem Körper des Einsatzes (49) verquetscht ist.

4. Einsatz (20; 49) nach Anspruch 3, der eine Wand (52) umfasst, die eine Kante (56) definiert und bei dem die Klaue (55) eine Basis (66) aufweist, die auf diese Kante (56) aufgeschoben ist.

5. Einsatz (20; 49) nach Anspruch 4, der mehrere Rippen (89 - 93) aufweist, die sich senkrecht zu der Wand (52) erstrecken, und bei dem die Klaue (55) einen Rand aufweist, in dem Kerben ausgebildet sind, die mit diesen Rippen (89 - 93) in Eingriff stehen.

6. Einsatz (20; 49) nach einem der Ansprüche 1 bis 5, der eine allgemeine Form aufweist, die dem Buchstaben T entspricht, um eine Mittelsäulenbasis der Karosserie zu versteifen, indem er zumindest teilweise zwischen einer Aufbauseite (46) und einem Innenlängsträger (38) angeordnet wird.

7. Einsatz (20) nach den Ansprüchen 1 bis 5, der eine allgemeine Dreiecksform aufweist, um eine A-Säulenbasis der Karosserie zu versteifen, indem er zumindest teilweise zwischen einer Karosserieseite (3) und einem Innenlängsträger (19) angeordnet wird.
